# EUROPEAN PATENT APPLICATION

(11) **EP 4 762 905 A1**
(43) Date of publication of application: **24.06.2026**
(21) Application number: 25383131.7
(22) Date of filing: 17.10.2025
(51) Int. Cl.: A01D 34/43, A01D 34/44, A01D 34/56, A01B 73/04

(54) **FLAIL MOWER**

(30) Priority: 18.12.2024 ES 202431071 U
(71) Applicant: Serrat Alcay, Jose, 22510 Binaced (Huesca) (ES); Serrat Alcay, Pedro, 22510 Binaced (Huesca) (ES); Serrat Alcay, Raul, 22510 Binaced (Huesca) (ES)
(72) Inventor: Serrat Alcay, Jose, 22510 Binaced (Huesca) (ES); Serrat Alcay, Pedro, 22510 Binaced (Huesca) (ES); Serrat Alcay, Raul, 22510 Binaced (Huesca) (ES)
(74) Representative: Herrero & Asociados, S.L.

(57) **Abstract**

The invention relates to a flail mower fitted with two pivoting heads (7-7'), wherein the front or anterior head (7') takes the left-hand position relative to the direction of the tractor's advance, whereas the rear head (7) takes the right-hand position, thereby the visibility when manoeuvring the machine being improved. These heads include independent actuating means, which include a clutch or free-wheel system that may be actuated if one of the heads gets clogged.

Furthermore, the invention relates to the three-point support (1) for the fixation to the tractor, which is more economical due to its configuration composed of hexagonal tubes, and more versatile, given that it can be attached to either end of the main longitudinal frame (5) of the machine.

## Description

### TECHNICAL FIELD

The present invention relates to a flail mower, of the type that utilises a plurality of articulated hammer flails mounted on a rotor, which move freely within a protective housing inside of which these brush-cut or shred, for example plant debris.

The object of the invention consists in achieving a machine with a notably larger working width than conventional flail mowers, virtually twice said width, with full operational efficiency and without said measurements or dimensions hindering the transportation of the machine from one place to another, and in which the working heads of the machine can be folded and unfolded at full speed.

Another object of the invention is to achieve a machine as manoeuvrable as possible, so that the machine operator has optimum visibility when moving the machine and its heads when the space available for manoeuvring is limited.

At the same time, the invention also aims to provide a machine with maximum versatility of use, in which its three-point hitch has a reversible structure and is less expensive to manufacture.

Lastly, the invention provides a new structuring in which, in the event of a clogging in one of the heads, the power supplied to the machine is not transmitted in duplicate to the other head, given the damage that this might cause.

### BACKGROUND OF THE INVENTION

The flail mowers known so far have a protective housing, equipped with coupling means to an agricultural tractor, a rotor shaft being mounted inside said housing, said rotor shaft being fitted with a plurality of shredding hammers or hammer flails, in addition to said housing having a supporting roller on the ground that sets the working level for the flail mower, which receives the required movement for its rotor shaft by means of the hydraulic circuit of the tractor itself.

The movement of the machine on public roads predetermines the fact that the length of its housing must not exceed the maximum dimensions permitted for such circulation, which is clearly an undesirable limitation.

In an attempt to overcome this issue, the applicant themselves is the owner of the patent of invention ES 2291092, in which a flail mower with two rotor shafts mounted therein is described, arranged in a parallel and transversal manner, shifted in an anteroposterior direction and overlapping in a transversal direction, each rotor shaft being fitted with a corresponding protective housing and both housings being mounted pivotably on a shared and anteroposterior shaft, which is in addition the shaft for transmitting movement to the rotor shafts of said housings.

More specifically, the front head takes the right-hand position, and the rear head takes the left-hand position.Then, when the operator is in the cab, this arrangement implies that the left-hand head is not clearly visible, although it is the element that protrudes to the greatest extent from the bottom of the assembly, not being possible to control the existing gap.

Another problem that can be observed in this type of machine is that the three-point hitch they use only has one position of use, which limits or hampers the machine's mobility when it is intended to move in the opposite direction to the usual working direction.

This type of hitches features a configuration composed of round tubes that makes them complex to manufacture and assemble, resulting in high manufacturing costs.

Finally, it should be noted that, when one head of this type of machine becomes clogged, all the power of the tractor carrying it is automatically transferred to the other head, i.e. it is doubled, an excess power that can cause damage to the head being thereby generated.

### DESCRIPTION OF THE INVENTION

The flail mower proposed by the invention solves the aforementioned problem fully adequately in each and every one of the aspects discussed above.

To this, the claimed invention is composed of a longitudinal frame ending in a three-point hitch, on which longitudinal frame two rotor shafts are mounted, arranged in a parallel and transversal manner, shifted in the anteroposterior direction and overlapping in the cross direction, each rotor shaft being fitted with the corresponding protective housing in such a manner that the front or anterior head takes the left-hand position, whereas the rear head takes the right-hand position, both heads being mounted pivotably on a shared and anteroposterior shaft attached to the longitudinal frame, which is in addition the shaft for transmitting movement to the rotor shafts of said housings.

This new arrangement for the heads is particularly important, given that, when the operator is located in the cab, they can control the movement of the right-hand head because they can move it from left to right, thus controlling the existing gap, so that, if there is only a small space left, they can move it.

This arrangement makes the rear head be more visible so it can be controlled with greater precision in situations where space is limited.

In this manner, since the heads are foldable, it allows a wide working strip to be created when they are unfolded, without these heads hindering the transportation of the machine, as they can be folded to a vertical position in which they do not protrude in the slightest from the sides of the tractor.

This is achieved without negatively affecting the system that transmits movement to these heads, as they pivot on the drive shaft of the machine, which is arranged longitudinally and centrally. This means that the modularity or plurality of rotor shafts is achieved by means of a structure of the highest simplicity and, consequently, the greatest economy.

According to another feature of the invention, it is envisaged that the aforementioned heads will partially overlap at their inner ends in order to avoid dead spaces during the clearing operation.

The side transmission systems actuating the rotors are housed inside the machine assembly. In this manner, the sides are left clear so that they can perform their task efficiently.

The modularity or fragmentation of the heads also allows for a better adaptation to the terrain surface, particularly when this is uneven.

According to another essential feature of the invention, both heads will be independently actuated, with separate power take-offs, including a clutch or free-wheel system, so that when one head becomes clogged, the power of the other head does not increase.

Lastly, an according to another feature of the invention, the three-point hitch is obtained from hexagonal tubes. This allows manufacturing costs to be saved and the assembly to be more simple.

It is a cast steel sheet assembly mounted in a single body, through which material savings, greater strength, greater reliability and less working time are achieved.

This three-point hitch is reversible, meaning that it can be mounted in two opposite positions, i.e. it can be mounted and demounted on either side of the machine so that this facilitates the displacement movements of the machine in both directions.

### DESCRIPTION OF THE DRAWINGS

To complement the following description and for a better understanding of the features of the invention, in accordance with an exemplary preferred embodiment thereof, a set of drawings is attached as an integral part of this description, in which the following is illustrated in an illustrative and non-limiting manner:
figure 1.- shows a perspective view of a flail mower configured in accordance with the object of this invention.
figure 2.- shows an anterior front elevation view of the machine.

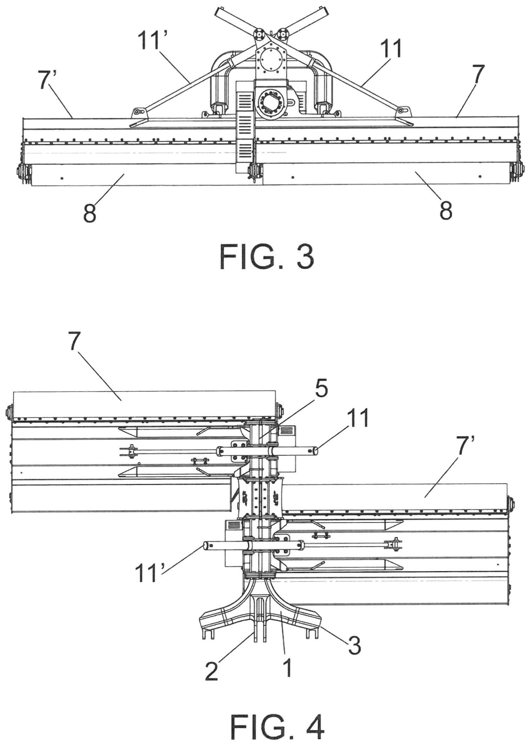

figure 3.- shows a rear front elevation view of the machine.
figure 4.- shows a plan view of the machine.
figure 5.- shows a profile view of the machine.
figure 6.- shows a similar view to that from figure 3, but in which the machine is shown with its heads being folded.
figure 7.- shows a similar view to that from figure 2, but in which the machine is shown with its heads being folded.
figure 8.- shows a similar view to that from figure 5, but in which the machine is shown with its heads being folded.

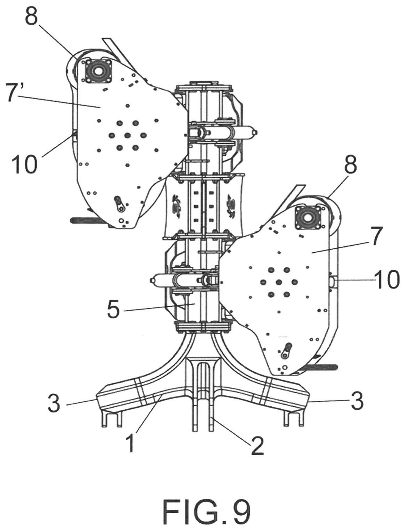

figure 9.- shows a similar view to that from figure 4, but in which the machine is shown with its heads being folded.

### PREFERRED EMBODIMENT OF THE INVENTION

In view of the figures outlined, the flail mower of the invention features a three-point support (1), fitted with a pair of central lugs (2) and a pair of side arms (3) fitted with means of fixation to the tractor.

The three-point support ends in the rear part in a fixing flange (4) to a longitudinal frame (5) inside of which the drive shaft of the machine is mounted and which is fitted with a power take-off for coupling to the tractor.

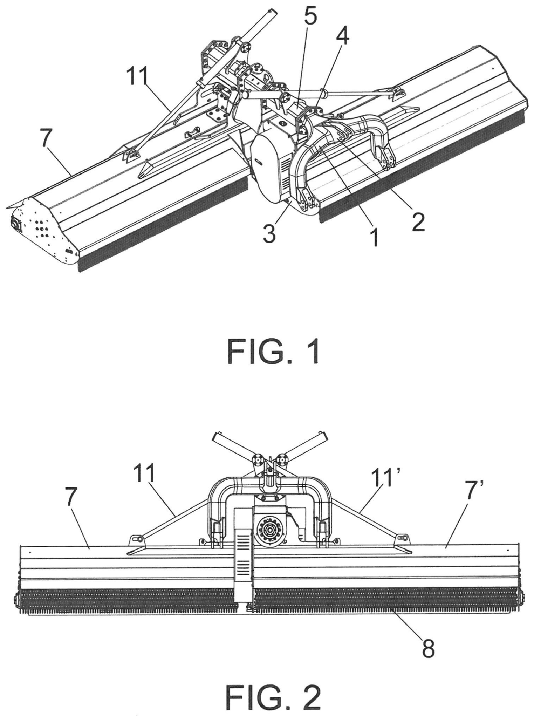

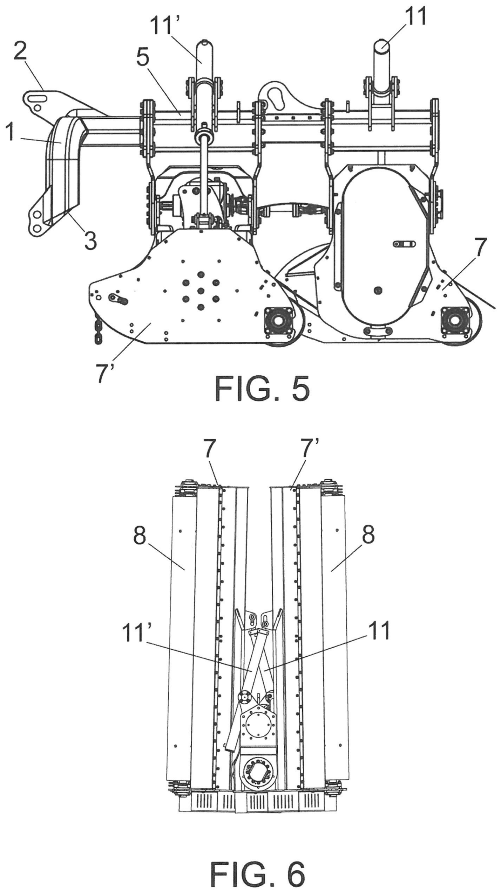

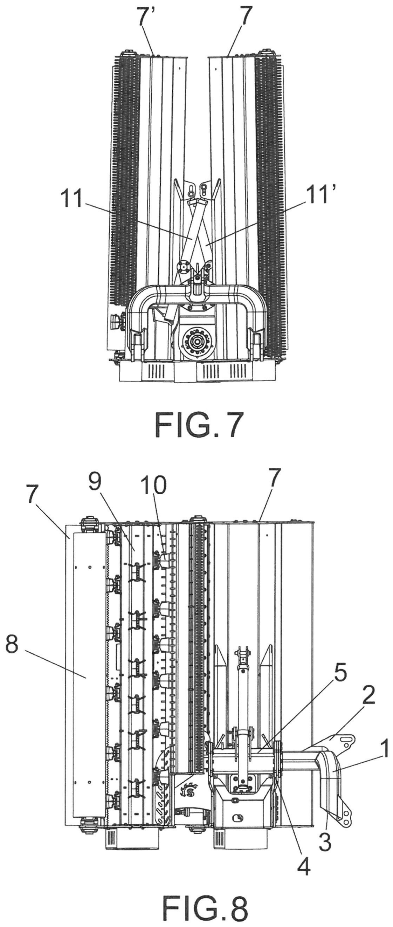

Two heads (7-7') with their corresponding supporting rollers (8) on the ground as well as their corresponding rotor shafts (9) fitted with the classical hammer flails (10) are mounted on the longitudinal frame (5), so the shaft contained within the above-mentioned longitudinal frame (5) directly transmits the movement to both rotor shafts (9), regardless of in which position said rotor shafts (9) are arranged, i.e. a horizontal or working position shown in figure 1, or a vertical or non-operating position, after an upward pivoting, as it is shown as an example in figures 6 to 8.

These heads are placed in a particular arrangement in which the anterior or front head (7') takes the left-hand position relative to the direction of the tractor's advance, whereas the rear head (7) takes the right-hand position. This arrangement makes the rear head be more visible to the vehicle's operator given their operating position, so the machine can be controlled with greater precision in situations where space is limited.

To change the position of the heads (7-7') and of their corresponding rotor shafts (9), two hydraulic cylinders (11-11') are arranged along the longitudinal frame (5) so that, when these hydraulic cylinders (11-11') are extended, the respective heads take a horizontal position that can be modified according to irregularities that may exist in the terrain, whereas, when the hydraulic cylinders (11-11') are retracted, the heads (7-7') pivot upwardly up to a vertical position in which they do not protrude at all from the sides of the tractor, their transportation being thereby allowed on any transport route on which the tractor itself could displace.

As it has been mentioned above, both heads will be independently actuated, with separate respective power take-offs, including a clutch or free-wheel system, so that when one head becomes clogged, the power of the other head does not increase.

Regarding the three-point hitch (1), this is obtained from hexagonal tubes. This allows manufacturing costs to be saved and the assembly to be more simple.

More specifically, it is a cast steel sheet assembly mounted in a single body, through which material savings, greater strength, greater reliability and less working time are achieved.

This three-point hitch is reversible, so the longitudinal frame (5) includes on both ends fixing flanges that are complementary to the flange (4) of said hitch. In this manner, it can be mounted on both ends, which is of particular interest when storing the machine or if little space for manoeuvring is available, while the machine will always be able to move optimally for driving the tractor according to the intended direction of movement.

## Claims

1. A flail mower, of the type couplable to an agricultural tractor and actuatable by said vehicle, fitted with coupling means to the back and three-point hitch system thereof and with rolling supporting means on the ground, in addition to shredding means actuated by the power take-off of the tractor, fitted with a longitudinal frame (5) on which a pair of rotor shafts (9) are mounted pivotably, which in turn are mounted on respective heads (7-7') with their protective housings, arranged in a parallel and transversal manner, shifted in an anteroposterior direction and overlapping in a transversal direction, both heads being mounted pivotably on a shared and anteroposterior shaft being actuatable by means of respective hydraulic cylinders (11-11'), **characterised in that** the front or anterior head (7') takes the left-hand position relative to the direction of the tractor's advance, whereas the rear head (7) takes the right-hand position, both heads being fitted with independent actuating means, which include a clutch or free-wheel system that may be actuated if one of the heads becomes clogged.

2. The flail mower according to claim 1, wherein the coupling means to the three-point hitch system of the tractor are embodied in a three-point support (1), fitted with a pair of central lugs (2) and a pair of side arms (3) fitted with means of fixation to the tractor, said support consisting of hexagonal tubes made of a cast steel sheet.

3. The flail mower according to claims 1 and 2, wherein the three-point support (1) ends in the rear part in a fixing flange (4) to the longitudinal frame (5), said longitudinal frame (5) including on both ends fixing flanges that are complementary and selective for the flange (4) provided in the three-point support (1).
